Europäisches Patentamt

European Patent Office

Office européen des brevets

(19)

(11) Numéro de publication : **0 057 386**
**B1**

(12) **FASCICULE DE BREVET EUROPÉEN**

(45) Date de publication du fascicule du brevet :
**09.10.85**

(21) Numéro de dépôt : **82100409.0**

(22) Date de dépôt : **21.01.82**

(51) Int. Cl.⁴ : **B 65 G 47/30, B 65 G 43/08**

(54) Dispositif pour régulariser le transfert de produits solides identiques.

(30) Priorité : **03.02.81 FR 8102045**

(43) Date de publication de la demande :
**11.08.82 Bulletin 82/32**

(45) Mention de la délivrance du brevet :
**09.10.85 Bulletin 85/41**

(84) Etats contractants désignés :
**BE DE GB IT NL**

(56) Documents cités :
**DE-A- 2 333 734**
**DE-B- 1 273 419**
**US-A- 3 374 875**

(73) Titulaire : **BISCUITERIE NANTAISE - BN Société Anonyme dite**
**Place François II**
**F-44200 Nantes (Loire-Atlantique) (FR)**

(72) Inventeur : **Cosse, Lionel**
**13 rue Belleville**
**F-44100 Nantes (Loire-Atlantique) (FR)**

(74) Mandataire : **Simonnot, Bernard et al**
**Cabinet Simonnot 49, Rue de Provence**
**F-75442 Paris Cédex 09 (FR)**

## Description

La présente invention concerne un dispositif pour régulariser en continu le transfert de produits solides identiques, tels que des biscuits, entre un appareil débiteur amont et un appareil récepteur aval, tel que défini dans le préambule de la revendication 1.

Dans le domaine de la production en série, on sait qu'il est fréquemment nécessaire d'absorber les à-coups de production entre deux machines consécutives faisant partie d'une chaîne de fabrication. A cet effet, de nombreux dispositifs intermédiaires ont déjà été mis au point, notamment des dispositifs de stockage plus ou moins complexes. Mais ces dispositifs connus impliquent une immobilisation des produits qui est particulièrement préjudiciable au rendement de l'installation, voire à la qualité des produits lorsque ceux-ci sont susceptibles de subir une altération dans le temps. En outre, ces dispositifs sont généralement mal adaptés au stockage de produits fragiles et, dans le cas particulier des biscuits, les manutentions supplémentaires entraînent fréquemment la détérioration d'un certain nombre de produits.

Dans le domaine du transfert de produits, le document DE-A-2 333 734 décrit une machine pour régulariser en continu le transfert de produits identiques entre un appareil débiteur amont et un appareil récepteur aval selon le préambule de la revendication 1. Ces produits sont transportés en file jusqu'à un front de déversement à partir duquel ils sont transportés en file jusqu'à l'appareil aval, un détecteur de produits en aval permettant le déplacement du front vers l'un ou l'autre appareil en fonction du débit relatif des deux. Dans cette machine cependant, le transporteur de sortie avance pas à pas à vitesse uniforme tandis que le front de déversement ne peut se déplacer, dans un sens ou dans l'autre, qu'à la vitesse dudit transporteur aval, ladite machine ne comportant aucun moyen pour faire varier le pas des produits transportés.

Par ailleurs, le brevet US-A-3 374 875 décrit également une machine pour transférer des produits identiques entre un appareil débiteur amont et un appareil récepteur aval. Les produits issus de l'appareil débiteur y sont transportés à plat, avec un pas maximal constant, jusqu'à un front de déversement au niveau duquel le pas est réduit. Les produits sont alors transportés avec un pas minimal constant et non réglable jusqu'à l'appareil récepteur. Cette machine ne comporte cependant pas de moyen permettant le déplacement des organes constituant ledit front de déversement en fonction du débit des appareils amont et aval, du fait qu'elle est essentiellement destinée à découper une matière première en produits identiques et à simplement les accumuler en les redressant les uns contre les autres vers ledit appareil récepteur aval.

La présente invention vise à remédier aux imperfections ci-dessus, en fournissant un dispositif pour transférer rapidement et sans à-coups des produits solides identiques entre deux machines d'une chaîne de fabrication, le transfert s'effectuant sans risque de détérioration dans le cas de produits fragiles.

Conformément à l'invention, le dispositif pour régulariser en continu le transfert de produits solides identiques entre un appareil débiteur amont et un appareil récepteur aval, les produits issus de l'appareil débiteur se présentant en file et reposant à plat par leur face la plus large, est du type comprenant un transporteur d'entrée à bande sans fin animée d'une vitesse d'entrée adaptée au débit de l'appareil débiteur amont, un transporteur de sortie à bande sans fin animée d'une vitesse de sortie adaptée au débiteur de l'appareil récepteur aval, un déversoir dont l'entrée est associée à l'extrémité aval du transporteur d'entrée et dont la sortie est disposée au-dessus de la bande du transporteur de sortie, et un détecteur de présence des produits sur la bande du transporteur d'entrée, relié à des moyens de déplacement du déversoir et de l'extrémité aval du transporteur d'entrée, les moyens de déplacement comprenant un chariot sur lequel sont montés le déversoir fixe. Ce dispositif est en outre caractérisé par le fait que la vitesse de sortie du transporteur de sortie est inférieure ou au plus égale à la vitesse d'entrée du transporteur d'entrée ; que ledit détecteur est relié à des moyens de maintien de la tension de la bande du transporteur d'entrée, et que les moyens de déplacement comprennent une poulie différentielle, dont les deux organes d'entrée sont respectivement reliés aux moyens d'entraînement des transporteurs à bande d'entrée et de sortie et dont l'organe de sortie est relié au chariot par l'intermédiaire d'un premier embrayage, un second embrayage monté entre le moyen d'entraînement du transporteur à bande de sortie et le chariot, et un commutateur à deux positions, dont le circuit de commande d'entrée est relié au détecteur, dont une sortie est reliée directement à l'organe de commande du premier embrayage et dont l'autre sortie est reliée à l'organe de commande du second embrayage, éventuellement par l'intermédiaire d'un élément de temporisation, moyennant quoi ledit déversoir est déplacé en amont ou en aval à une vitesse qui est fonction de la différence entre lesdites vitesses d'entrée et de sortie, par l'intermédiaire de la poulie différentielle.

Suivant d'autres caractéristiques :

— les moyens de déplacement comprenant le chariot comportent, en outre, un rouleau fou qui forme l'extrémité aval du transporteur à bande d'entrée.

— les moyens de maintien de la tension de la bande du transporteur d'entrée comprennent une chaîne destinée à assujettir un second chariot muni d'un rouleau sur lequel passe ladite bande, à un déplacement égal et de sens opposé à celui du chariot associé à l'extrémité aval dudit transporteur d'entrée.

Le dispositif ci-dessus permet en outre, de manière avantageuse :

— de réduire le pas des produits tout en les redressant pour les faire passer de leur position à plat à une position inclinée ou sur chant ;

— de traiter simultanément plusieurs files parallèles de produits.

D'autres caractéristiques et avantages de l'invention ressortiront mieux de la description qui va suivre, faite en regard des dessins annexés sur lesquels :

la figure 1 représente une vue schématique d'un dispositif selon l'invention, permettant la réalisation des opérations mentionnées ci-dessus ;

la figure 2 représente une vue schématique des moyens de déplacement du déversoir faisant partie du dispositif représenté sur la figure 1 ; et

la figure 3 représente une vue schématique partielle du dispositif de la figure 1, le déversoir comportant un moulinet de redressement des produits.

Sur ces dessins, les mêmes références désignent les mêmes éléments.

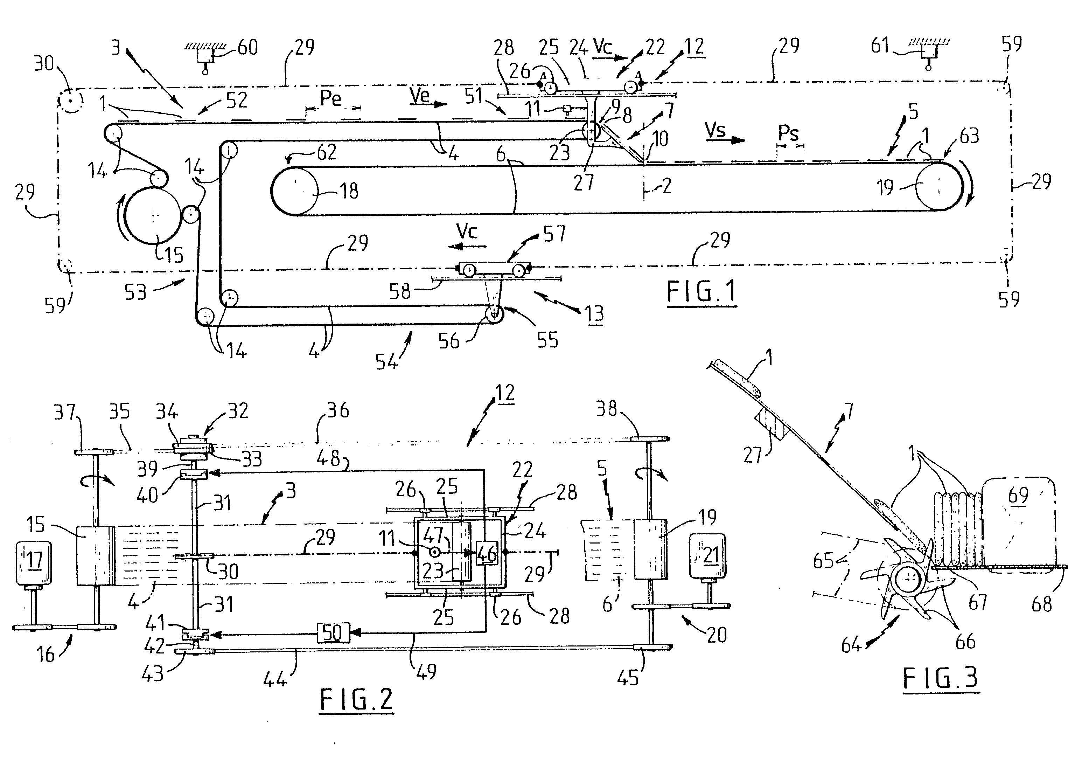

En se référant aux figures 1 à 3, le dispositif pour régulariser en continu le transfert de produits solides identiques 1 entre un appareil débiteur amont (non représenté) et un appareil récepteur aval (non représenté) est du type dans lequel les produits issus de l'appareil débiteur se présentent en file et reposent à plat par leur face la plus large. Par exemple, les produits 1 peuvent être des biscuits provenant d'une machine de fabrication et destinés à une machine de conditionnement, le transfert des biscuits devant s'effectuer en continu et sans à-coups entre les deux machines.

Au moyen du dispositif, on transporte en file avec un pas d'entrée maximal constant $P_e$ les produits 1 provenant de l'appareil amont, on effectue une réduction de pas en déterminant un front de changement de pas 2, puis on transporte les produits 1 en file avec un pas de sortie minimal constant $P_s$ jusqu'à l'appareil aval. Simultanément, on détecte la présence des produits 1 avant leur réduction de pas et, comme cela sera expliqué plus en détail ci-après, on déplace le front 2 vers l'un ou l'autre appareil en fonction du débit relatif de ces deux appareils.

Du fait que le pas d'entrée $P_e$ et le pas de sortie $P_s$ sont maintenus constants, la réduction de pas présente évidemment une valeur fixe. Dans le cas où l'on choisit une réduction de pas de valeur faible, il est habituellement possible de maintenir les produits, après le front de changement de pas 2, dans la même position à plat que celle qu'ils occupaient avant d'atteindre ledit front. Toutefois, dans le cas le plus fréquent, on préfère une réduction de pas de valeur importante afin d'augmenter la capacité de stockage du dispositif. Dans ces conditions, le pas de sortie $P_s$ doit généralement présenter une valeur inférieure à la longueur de la face de support de chacun des produits et, pour obtenir ce résultat, on réduit le pas des produits 1 tout en les redressant pour les faire passer de leur position à plat à une position inclinée ou sur chant.

Par ailleurs, suivant une autre possibilité du dispositif selon l'invention, on traite simultanément plusieurs files parallèles de produits 1, par exemple huit files parallèles, le front de changement de pas 2 étant de préférence situé au même niveau pour toutes les files.

En se référant plus particulièrement aux figures 1 et 2, le dispositif pour la mise en œuvre du processus ci-dessus comprend essentiellement un transporteur d'entrée 3 à bande sans fin 4, un transporteur de sortie 5 à bande sans fin 6, un déversoir 7, dont l'entrée 8 est associée à l'extrémité aval 9 du transporteur d'entrée 3 et dont la sortie 10 est disposée au-dessus de la bande 6 du transporteur de sortie 5, et un détecteur 11 de la présence des produits 1 sur la bande 4 du transporteur d'entrée 3, ce détecteur étant relié à des moyens 12 de déplacement du déversoir 7 et de l'extrémité aval 9 du transporteur d'entrée 3 et à des moyens 13 de maintien de la tension de la bande 4 dudit transporteur d'entrée 3.

La bande sans fin 4 du transporteur d'entrée 3 est animée d'une vitesse d'entrée $V_e$ adaptée au débit de l'appareil débiteur amont. Selon une forme possible de réalisation, la bande 4 est inextensible et enroulée autour d'un certain nombre de rouleaux fous 14 disposés de manière à la maintenir tendue tandis qu'elle est entraînée par un tambour 15 dont la vitesse est assujettie au fonctionnement de l'appareil débiteur amont, par exemple par l'intermédiaire d'un dispositif 16 à poulies et courroie accouplé à un moteur 17 synchronisé avec le débit de l'appareil débiteur amont.

De la même manière, la bande sans fin 6 du transporteur de sortie 5 est animée d'une vitesse de sortie $V_s$ qui est adaptée au débit de l'appareil récepteur aval, la vitesse de sortie $V_s$ étant inférieure ou égale à la vitesse d'entrée $V_e$ du transporteur d'entrée 3. Selon une forme possible de réalisation, la bande 6 est inextensible et enroulée, avec la tension voulue, autour d'un rouleau fou 18 et d'un tambour 19, ce dernier pouvant être entraîné par un dispositif 20 à poulies et courroie accouplé à un moteur 21 synchronisé avec le débit de l'appareil récepteur aval.

Selon l'invention, les moyens de déplacement 12 qui sont associés au déversoir 7 et à l'extrémité aval 9 du transporteur d'entrée 3, sous la commande du détecteur 11 de la présence des produits 1 sur la bande 4 dudit transporteur, comprennent essentiellement un chariot 22 sur lequel sont montés le déversoir 7 et un rouleau fou 23 faisant partie des rouleaux 14 et formant l'extrémité aval 9 du transporteur à bande d'entrée 3. Par exemple, le chariot 22 peut comprendre un châssis rectangulaire 24 dont les faces latérales 25 sont munies de roues 26 et présentent des pattes 27 supportant à la fois le déversoir 7 et l'axe du rouleau 23. Le déversoir 7 peut être constitué par une simple glissière inclinée, de manière que son entrée 8 soit disposée en regard du rouleau 23 formant l'extrémité aval 9 du transporteur d'entrée 3 et que sa sortie 10 soit maintenue au-dessus de la bande 6 du transporteur de sortie 5. En outre, le détecteur 11 peut être monté directement sur le chariot 22, étant entendu qu'il suffit de contrôler la présence ou l'absence des produits 1 sur une seule des files du transporteur d'entrée 3 dans la mesure où l'appareil débiteur amont délivre les produits 1 simultanément sur toutes les files en service dudit transporteur.

Lorsqu'on traite ainsi simultanément plusieurs files de produits 1, par exemple huit files, il est clair que le transporteur d'entrée 3, le déversoir 7 et le transporteur de sortie 5 peuvent comporter des organes séparateurs de files (non représentés) destinés à maintenir les produits en file pendant leur transfert entre l'appareil débiteur amont et l'appareil récepteur aval.

D'une façon générale, dans la mesure où la vitesse de sortie $V_s$ est inférieure à la vitesse d'entrée $V_e$, on obtient bien un pas de sortie $P_s$ inférieur au pas d'entrée $P_e$, la réduction de pas s'effectuant au niveau du déversoir 7 et le front de changement de pas 2 pouvant être considéré comme placé à l'aplomb de l'entrée 8 du déversoir ou, de préférence, à l'aplomb de la sortie 10 dudit déversoir 7. Dans tous les cas, pour déplacer le front 2 vers l'un ou l'autre des appareils amont et aval en fonction du débit relatif de ces deux appareils, il suffit de déplacer le chariot 22 sur des rails 28 parallèles au transporteur d'entrée 3, par exemple au moyen d'une chaîne sans fin 29 fixée sur le châssis 24 et s'enroulant sur un pignon moteur 30 solidaire d'un arbre 31 qui est entraîné en rotation en fonction des débits des deux appareils, c'est-à-dire en fonction des vitesses des tambours 15 et 19, ces derniers étant respectivement entraînés par les moteurs 17 et 21 synchronisés avec lesdits débits, comme indiqué précédemment.

A cet effet, les moyens de déplacement 12 peuvent comprendre une poulie différentielle 32 dont les deux organes d'entrée 33 et 34 sont respectivement reliés au moyens d'entraînement des transporteurs à bande d'entrée et de sortie 3 et 5, c'est-à-dire aux tambours correspondants 15 et 19, par l'intermédiaire de courroies 35, 36 et de poulies 37, 38 respectives, et dont l'organe de sortie 39 est relié à l'arbre 31 d'entraînement du chariot 22 par l'intermédiaire d'un premier embrayage 40, un second embrayage 41 étant monté entre le moyen d'entraînement du transporteur à bande de sortie 5 et le chariot 22, c'est-à-dire entre l'arbre 31 d'entraînement du chariot 22 et un arbre 42 solidaire d'une poulie 43 qui est reliée par une courroie 44 à une autre poulie 45 rendue solidaire du tambour 19 correspondant au transporteur de sortie.

Du fait que les embrayages 40 et 41 commandent tous deux l'arbre 31 d'entraînement du chariot 22, ils sont de préférence disposés de part et d'autre du pignon 30 et il est évident que lorsque l'un des embrayages est à l'état embrayé, l'autre doit être à l'état débrayé. Pour obtenir ce résultat, les moyens de déplacement 12 peuvent comprendre, par exemple, un commutateur 46 à deux positions, dont le circuit de commande d'entrée 47 est relié au détecteur 11, dont une sortie 48 est reliée directement à l'organe de commande du premier embrayage 40 et dont l'autre sortie 49 est reliée à l'organe de commande du second embrayage 41, éventuellement par l'intermédiaire d'un élément de temporisation 50 dont l'utilité sera expliquée ci-après en se référant au fonctionnement de l'ensemble du dispositif selon l'invention.

En ce qui concerne les transporteurs d'entrée et de sortie 3 et 5, le fait de choisir des transporteurs du type à bande sans fin implique que le brin actif de chaque bande, c'est-à-dire le tronçon supportant les produits 1, soit maintenu rectiligne, ce qui permet de conserver le même pas simultanément pour toutes les files de la bande considérée. Dans ces conditions, si les transporteurs 3 et 5 sont disposés obliquement l'un par rapport à l'autre, il est nécessaire que le déversoir 7 comporte des organes de guidage curvilignes associés à chaque file, les produits 1 délivrés sur deux files voisines du transporteur de sortie 5 étant alors décalés en fonction de la différence des temps de chute correspondant à ces deux files. Dans le cas particulier où les transporteurs 3 et 5 sont montés perpendiculairement l'un à l'autre, il apparaît encore plus clairement que le brin actif du transporteur d'entrée 3 doit pivoter autour de son extrémité amont en effectuant un mouvement de type circulaire qui n'est évidemment pas directement proportionnel au déplacement rectiligne du chariot.

Compte tenu des difficultés à surmonter pour rendre pivotant le brin du transporteur d'entrée 3, il est particulièrement avantageux de réaliser le dispositif selon l'invention de telle sorte que les transporteurs d'entrée et de sortie 3 et 5 soient parallèles entre eux et de préférence horizontaux, le transporteur d'entrée 3 comportant une partie aval 51 recouvrant partiellement le transporteur de sortie 5 et le chariot 22 étant monté sur des rails 28 parallèles aux deux transporteurs.

Selon une autre particularité de l'invention, le transporteur d'entrée 3 comprend, de préférence au niveau de sa partie amont 52, un prolongement inférieur coudé 53 dont le bras terminal 54 est disposé parallèlement au transporteur de sortie 5 et au-dessous de ce dernier. L'extrémité 55 du bras terminal 54 comporte un rouleau 56 qui est identique au rouleau 23 formant l'extrémité aval 9 du transporteur d'entrée 3 et qui est monté à rotation dans un second chariot 57 supporté par des rails 58 parallèles aux rails 28 associés à l'extrémité aval 9.

Les moyens précités 13 de maintien de la tension de la bande 4 du transporteur d'entrée 3 peuvent alors comprendre une chaîne ou un autre organe destiné à assujettir le second chariot 57 à un déplacement égal et de sens opposé à celui du chariot 22 associé à l'extrémité aval 9 du transporteur d'entrée 3. En se référant à la forme de réalisation précédemment décrite, il suffit de prolonger la chaîne 29, solidaire du chariot 22 et en prise avec le pignon moteur 30, en la faisant passer autour de pignons fous 59 et en la fixant sur le second chariot 57 pour compenser sur la bande 4 du transporteur d'entrée tout déplacement du chariot 22. Compte tenu de la disposition des chariots 22 et 57 au-dessus des extrémités associées 9 et 55 du transporteur d'entrée 3, il est généralement nécessaire de monter la chaîne 29 d'un côté ou de l'autre de la bande 4, voire de la dédoubler de part et d'autre du transporteur.

Par ailleurs, le dispositif selon l'invention comprend en outre des interrupteurs de fin de course amont et aval, 60 et 61, qui sont respectivement disposés à proximité des extrémités amont et aval 62 et 63, du transporteur de sortie 5 et qui coopèrent avec le chariot 22 associé au déversoir 7 pour interrompre les fonctionnements respectifs de l'appareil débiteur amont et de l'appareil récepteur aval.

En se référant plus particulièrement à la figure 3, dans le cas où l'on désire réduire le pas des produits 1 tout en les redressant pour les faire passer de leur position à plat à une position inclinée ou sur chant, le dispositif selon l'invention peut comprendre un moulinet 64 de redressement des produits. Ce moulinet est évidemment disposé à la sortie du déversoir 7 et sa vitesse de rotation est adaptée à la vitesse du transporteur d'entrée 3, par exemple par l'intermédiaire d'une courroie 65 entraînée par le tambour 15, en tenant compte du nombre des pales 66 du moulinet. Chaque pale est généralement constituée par un peigne de quelques dents susceptibles de passer librement, soit entre des rubans formant la bande 6 du transporteur de sortie 5, soit, de préférence, entre des dents intercalaires 67 découpées dans un organe de guidage 68 muni de cales coulissantes 69 et · destiné à amener les produits 1 jusque sur la bande 6. Dans tous les cas, le transporteur de sortie 5 doit comporter des organes (non représentés) destinés à maintenir les produits inclinés ou sur chant.

Lors de l'utilisation du dispositif selon l'invention, le chariot 22 est généralement déplacé à une vitesse $V_c$ qui dépend de la différence des vitesses des deux transporteurs 3 et 5 et, par conséquent, du débit relatif des appareils amont et aval, en tenant évidemment compte des pas d'entrée et de sortie, notamment au niveau des deux organes d'entrée de la poulie différentielle 32. Lorsque les appareils amont et aval fonctionnent chacun avec un débit normal, le chariot ne se déplace pas. Le débit de l'appareil récepteur aval étant fixé et, par conséquent, la vitesse $V_s$ du transporteur de sortie 5 étant constante, toute variation du débit de l'appareil débiteur amont et, par conséquent, de la vitesse $V_e$ du transporteur d'entrée 3, détermine un déplacement lent du chariot 22 vers l'amont ou l'aval selon que le débit d'entrée est supérieur ou inférieur à la normale.

En fait, lorsque les produits 1 défilent normalement sous le détecteur 11, ce dernier maintient le commutateur 46 basculé dans une première position pour laquelle l'embrayage 40 est à l'état embrayé, de telle sorte que l'arbre 31 d'entraînement du chariot 22 est relié à l'organe de sortie 39 de la poulie différentielle 32. La vitesse du chariot 22 dépend alors de la différence des vitesses des tambours 15 et 19, c'est-à-dire du débit relatif des appareils amont et aval, étant entendu que le chariot de compensation 57 est déplacé avec une vitesse égale et de sens opposé à celle du chariot 22.

Lorsqu'il manque une rangée de produits 1, le détecteur 11 fait basculer le commutateur 46 dans une seconde position pour laquelle l'élément de temporisation 50 est déclenché tandis que l'embrayage 40 est débrayé, ce qui arrête temporairement le chariot 22.

Dans le cas où il manque une seconde rangée de produits 1, le détecteur 11 maintient le commutateur 46 dans sa seconde position et l'élément de temporisation 50 fait alors passer l'embrayage 41 à l'état embrayé, de telle sorte que l'arbre 31 est relié à l'arbre 42 et, par conséquent, au tambour 19, le chariot 22 se déplaçant alors à la même vitesse et dans le même sens que le transporteur de sortie 5.

Dans le cas où la rangée suivante de produits 1 est présente, le détecteur 11 provoque le basculement du commutateur 46 dans sa première position, faisant ainsi passer l'embrayage 40 à l'état embrayé et déterminant le retour de l'élément de temporisation 50 à son état initial ainsi que le retour de l'embrayage 41 à l'état débrayé.

Il y a lieu de noter que dans le cas où il ne manque qu'une seule rangée de produits 1, le détecteur 11 ramène l'élément de temporisation 50 à son état initial avant même que ce dernier n'ait fait passer l'embrayage 41 à l'état embrayé, ce qui permet d'éviter les à-coups de fonctionnement du chariot pour chaque rangée manquante isolée. Cependant, il est évident que cet élément de temporisation pourrait être supprimé. Par contre, un élément de temporisation doit nécessairement être associé au détecteur 11, la durée de la temporisation devant être légèrement inférieure au pas d'entrée des produits.

Dans le cas particulier où le fonctionnement de l'appareil débiteur amont s'interrompt, le tambour 15 s'arrête, à moins qu'il ne soit prévu un mécanisme de commande particulier destiné à maintenir la vitesse du transporteur d'entrée 3 pour éliminer tous les produits se trouvant encore sur la bande 4. Dans tous les cas, le chariot 22 se déplace vers l'aval jusqu'à ce qu'il atteigne une position pour laquelle il actionne le commutateur de fin de course aval 61 qui interrompt le fonctionnement de l'appareil récepteur aval et du tambour 19, arrêtant ainsi le transporteur de sortie 5.

Inversement, lorsque l'appareil récepteur aval s'arrête le premier et arrête ainsi le mouvement du transporteur de sortie 5, le chariot 22 se déplace vers l'amont jusqu'à une position pour laquelle il agit sur le commutateur de fin de course amont 60 qui interrompt le fonctionnement de l'appareil débiteur amont et du transporteur d'entrée 3.

Il est bien entendu que la présente invention n'a été décrite et représentée qu'à titre explicatif mais nullement limitatif et qu'on pourra y apporter toute modification utile, notamment dans le domaine des équivalences techniques, sans sortir de son cadre tel que défini par les revendications.

**Revendications**

1. Dispositif pour régulariser en continu le transfert de produits solides identiques (1) entre un appareil débiteur amont et un appareil récepteur aval, les produits issus de l'appareil débiteur se présentant en file et reposant à plat par leur face la plus large, du type comprenant un transporteur d'entrée (3) à bande sans fin (4) animée d'une vitesse d'entrée (Ve) adaptée au débit de l'appareil débiteur amont, un transporteur de sortie (5) à bande sans fin (6) animée d'une vitesse de sortie (Vs) adaptée au débit de l'appareil récepteur aval, un déversoir (7) dont l'entrée (8) est associée à l'extrémité aval (9) du transporteur d'entrée (3) et dont la sortie (10) est disposée au-dessus de la bande (6) du transporteur de sortie (5), et un détecteur (11) de présence des produits sur la bande (4) du transporteur d'entrée (3), relié à des moyens (12) de déplacement du déversoir (7) et de l'extrémité aval du transporteur d'entrée, les moyens (12) de déplacement comprenant un chariot (22) sur lequel est monté le déversoir (7), dispositif caractérisé par le fait que la vitesse de sortie (Vs) du transporteur de sortie (5) est inférieure ou au plus égale à la vitesse d'entrée (Ve) du transporteur d'entrée (3) ; que ledit détecteur (11) est relié à des moyens (13) de maintien de la tension de la bande (4) du transporteur d'entrée (3), et que les moyens (12) de déplacement comprennent une poulie différentielle (32), dont les deux organes d'entrée (33, 34) sont respectivement reliés aux moyens d'entraînement des transporteurs à bande d'entrée (3) et de sortie (5) et dont l'organe de sortie (39) est relié au chariot (22) par l'intermédiaire d'un premier embrayage (40), un second embrayage (41) monté entre le moyen d'entraînement du transporteur à bande de sortie (5) et le chariot (22), et un commutateur (46) à deux positions, dont le circuit de commande d'entrée (47) est relié au détecteur (11), dont une sortie (48) est reliée directement à l'organe de commande du premier embrayage (40) et dont l'autre sortie (49) est reliée à l'organe de commande du second embrayage (41), éventuellement par l'intermédiaire d'un élément de temporisation (50), moyennant quoi ledit déversoir (7) est déplacé en amont ou en aval à une vitesse (Vc) qui est fonction de la différence entre lesdites vitesses d'entrée (Ve) et de sortie (Vs), par l'intermédiaire de la poulie différentielle (32).

2. Dispositif selon la revendication 1, caractérisé par le fait que les moyens (12) de déplacement comprenant le chariot (22) comportent, en outre, un rouleau fou (23) qui forme l'extrémité aval du transporteur à bande d'entrée (3).

3. Dispositif selon la revendication 1, caractérisé par le fait que les moyens (13) de maintien de la tension de la bande (4) du transporteur d'entrée (3) comprennent une chaîne (29) destinée à assujettir un second chariot (57) muni d'un rouleau (56) sur lequel passe ladite bande (4), à un déplacement égal et de sens opposé à celui du chariot (22) associé à l'extrémité aval dudit transporteur d'entrée (3).

**Claims**

1. A device for regularizing continuously the transfer of identical solid products (1) between an upstream delivery apparatus and a downstream receiving apparatus, the products emerging from the delivery apparatus being presented in a line and resting flat on their largest surface, of the type comprising an input conveyor (3) having an endless belt (4) actuated with an input speed (Ve) adapted to the rate of the upstream delivery apparatus, an output conveyor (5) having an endless belt (6) actuated with an output speed (Vs) adapted to the rate of the downstream receiving apparatus, a spillway (7) the input (8) of which is associated with the downstream end (9) of the input conveyor (3) and the output (10) of which is arranged above the belt (6) of the output conveyor (5), and a detector (11) of the presence of the products on the belt (4) of the input conveyor (3), coupled to displacement means (12) for the spillway (7) and the downstream end of the input conveyor, the displacement means (12) comprising a carriage (22) on which is mounted the spillway (7), device characterized in that the output speed (Vs) of the output conveyor (5) is less than or at most equal to the input speed (Ve) of the input conveyor (3), that said detector (11) is connected to means (13) for maintaining tension in the belt (4) of the input conveyor (3), and that the displacement means (12) include a differential pulley (32) the two input members (33, 34) of which are respectively connected to the drive means of the input (3) and output (5) conveyor belts and the output member (39) of which is connected to the carriage (22) through a first clutch (40), a second clutch (41) being mounted between the drive means for the output conveyor (5) belt and the carriage (22), and a two-position switch (46), the input control circuit (47) of which is connected to the detector (11), one output (48) of which is connected directly to the control member of the first clutch (40) and the other output (49) of which is connected to the control member of the second clutch (41), possibly through a time delay element (50), whereby said spillway (7) is displaced upstream or downstream at a speed (Vc) which depends on the difference between said input (Ve) and output (Vs) speeds, through the differential pulley (32).

2. A device as claimed in claim 1, characterized in that the displacement means (12) comprising the carriage (22) further comprise an idling roller (23) which forms the downstream end of the input conveyor (3) belt.

3. A device as claimed in claim 1, characterized in that the means (13) for maintaining the tension of the belt (4) of the input conveyor (3) comprise a chain (29) intended to subject a second carriage (57) having a roller (56) on which said belt (4) runs, to a displacement equal and opposite in direction to that of the carriage (22) associated with the downstream end of said input conveyor (3).

**Patentansprüche**

1. Anordnung zum kontinuierlichen Ausgleichen des Transfers gleichartiger fester Gegenstände (1) zwischen einem oberstromigen Abgabe- und einem unterstromigen Aufnahmegerät, wobei die aus dem Abgabegerät her kommenden Gegenstände in einer Reihe angeordnet sind und mit ihrer breiteren Fläche flach aufliegen, mit einem Eingangsförderer (3), der ein endloses Band (4) aufweist, dessen Eintrittsgeschwindigkeit (Ve) der Durchsatzleistung des stromaufwärts liegenden Abgabegerätes angepasst ist, einem Ausgangsförderer (5), der mit einem endlosen Band (6) ausgestattet ist, dessen Austrittsgeschwindigkeit (Vs) der Durchsatzleistung des stromabwärts liegenden Aufnahmegerätes angepasst ist, einem Überfall (7), dessen Eintrittsöffnung (8) dem stromabwärts gelegenen Ende (9) des Eingangsförderers (3) zugeordnet ist, und dessen Austrittsöffnung (10) oberhalb des Bandes (6) des Ausgangsförderers (5) angeordnet ist, sowie mit einem Sensor (11), der das Vorhandensein der Gegenstände auf dem Band (4) des Eingangsförderers (3) erfasst und mit Mitteln (12) zur Versetzung des Überfalls (7) und des stromabwärts gelegenen Endes des Eingangsförderers verbunden ist, wobei die Versetzungsmittel (12) aus einem Schlitten (22) bestehen, auf welchen der Überfall (7) gelagert ist, dadurch gekennzeichnet, das die Austrittsgeschwindigkeit (Vs) des Ausgangsförderers (5) kleiner als bsw. höchstens gleich der Eintrittsgeschwindigkeit (Ve) des Eingangsförderers (3) ist, dass der Sensor (11) mit Mitteln (13) verbunden ist, die die Spannung des Bandes (4) des Eingangsförderers (3) aufrechterhalten, und dass die Versetzungsmittel (12) aus einer Differential-Riemenscheibe (32), deren beiden Eintrittselemente (33, 34) jeweils mit den Mitteln zum Antrieb der Eingangs- (3) und Ausgangsbandförderer (5) verbunden sind und deren Austrittselement (39) durch eine erste Kupplung (40) mit dem Schlitten (22) verbunden ist, sowie aus einer zwischen dem Antriebsmittel des Ausgangsbandförderers (5) und dem Schlitten (22) angeordneten zweiten Kupplung (41) und einem Zweistellungsschalter (46) bestehen, dessen Eingang-Steuerschaltung (47) mit dem Sensor (11) verbunden ist, dessen einer Ausgang (48) unmittelbar mit dem Steuerorgan der ersten Kupplung (40) und dessen anderer Ausgang (49) mit dem Steuerorgan der zweiten Kupplung (41) ggf. durch ein Zeitverzögerungsglied (50) verbunden ist, wodurch der Überfall (7) durch die Differential-Riemenscheibe (32) stromaufwärts bzw. -abwärts mit einer Geschwindigkeit (Ve) verlagert wird, die abhängig ist von der Differenz zwischen Eintritts- (Ve) und Austrittsgeschwindigkeit (Vs).

2. Anordnung nach Anspruch 1, dadurch gekennzeichnet, dass die den Schlitten (22) umfassenden Versetzungsmittel (12) ausserdem eine lose gelagerte Rolle (23) aufweisen, die das stromabwärts gelegene Ende des Eingangsbandförderers (3) bildet.

3. Anordnung nach Anspruch 1, dadurch gekennzeichnet, dass die Mittel (13) zur Aufrechterhaltung der Spannung des Bandes (4) des Eingangsförderers (3) eine Kette (29) aufweisen, die dazu bestimmt ist, einen mit einer das Band (4) führenden Rolle (56) ausgestatteten zweiten Schlitten (57) in eine Bewegung zu versetzen, die der Bewegung des mit dem stromabwärts gelegenen Ende des Eingangsförderers (3) zusammenwirkenden Schlittens (22) gleich und entgegengesetzt ist.

0 057 386

FIG.1

FIG.2

FIG.3